(19) **Europäisches Patentamt / European Patent Office / Office européen des brevets**

(11) **EP 1 873 711 A1**

(12) **DEMANDE DE BREVET EUROPEEN**

(43) Date de publication:
**02.01.2008 Bulletin 2008/01**

(51) Int Cl.:
*G06T 1/60* (2006.01)

(21) Numéro de dépôt: **07110701.5**

(22) Date de dépôt: **20.06.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **21.06.2006 FR 0605559**

(71) Demandeur: **STMICROELECTRONICS SA 92120 Montrouge (FR)**

(72) Inventeurs:
• **Couvert, Patrice**
  **38160 SAINT-MARCELLIN (FR)**
• **Phillipe, Anthony**
  **38000 Grenoble (FR)**

(74) Mandataire: **Cabinet Plasseraud**
  **52 rue de la Victoire**
  **75440 Paris Cedex 09 (FR)**

(54) **Gestion de données pour un traitement d'images**

(57) Un système comprend une mémoire stockant des données à des adresses associées à des pixels d'images, chaque adresse étant liée par une fonction à des coordonnées d'un pixel dans un référentiel ordonné d'image, un dispositif de traitement des données associées aux pixels, un pixel à traiter étant pointé dans une image par un vecteur associé à partir d'un pixel de référence; et un dispositif d'interface fournissant des données au dispositif de traitement, et disposant de l'adresse des données associées à un pixel de référence.

Une requête de données (21) indique un vecteur associé à un pixel à traiter. Les coordonnées du pixel de référence sont déterminées (22) en appliquant la fonction (F) à une adresse des données associées au pixel de référence. Ensuite, les coordonnées du pixel à traiter sont obtenues (23) à partir des coordonnées du pixel de référence, et du vecteur. Puis, l'adresse des données associées au pixel à traiter est déterminée (24) en appliquant la fonction inverse de la fonction ($F^{-1}$) aux coordonnées du pixel à traiter. Les données lues dans la mémoire à l'adresse ainsi déterminée sont fournies (25) au processeur.

FIG.1.

**Description**

La présente invention concerne le traitement d'images et plus particulièrement la gestion de données relatives à des images stockées dans une mémoire externe à un dispositif de traitement d'image.

Dans certaines applications, comme par exemple dans le domaine de la vidéo, une mémoire de stockage de masse, ou mémoire externe, stocke des données qui sont destinées à être traitées par un processeur d'un dispositif de traitement de données selon un algorithme déterminé. Les données peuvent être stockées dans cette mémoire selon un format qui diffère du format de données utilisé par le processeur.

Ces données stockées en mémoire externe peuvent notamment correspondre à des informations de chrominance et de luminance. En effet, les images vidéo sont classiquement codées en utilisant de telles informations. Pour convertir un signal vidéo en des données de luminance et en des données de chrominance, le signal est échantillonné. Puis, des données de chrominance et/ou de luminance sont associées à tout ou partie des échantillons en fonction du codage de l'image utilisé.

Différents codage sont classiquement utilisés. Ainsi, par exemple, les termes '4:2:2' et '4:2:0' désignent des codages différents qui sont classiquement utilisés, chacun décrivant une structure d'une image numérique différente. Les termes 4:2:2 signifient que la chrominance est sous-échantillonnée horizontalement par un facteur de deux relativement à la luminance. Les termes 4:2:0 signifie que la chrominance est sous-échantillonnée horizontalement et verticalement par un facteur de deux relativement à la luminance. Ainsi, les données stockées varient non seulement en fonction du codage de l'image vidéo, qui fournit plus ou moins de données de luminance et de données de chrominance pour une image vidéo, mais aussi en fonction du format de stockage des données codées, puisqu'en effet, les données de chrominance et de luminance peuvent être stockées alternativement et successivement dans l'ordre des pixels d'une image ou encore de manière séparée, les données de chrominance d'un côté et les données de luminance d'un autre côté.

Afin de récupérer les données dans la mémoire externe, il est classique d'utiliser un dispositif de type DMA (Direct Memory Access', en anglais). Un dispositif DMA permet de réaliser des transferts directs de données entre une mémoire externe et une mémoire interne associée au processeur, sans recourir à l'intervention du microprocesseur, sauf exception, notamment pour initier et conclure le transfert des données.

Généralement, le processeur traite les données vidéo relativement aux localisations respectives des pixels composant les images vidéo.

Les données sont stockées à des adresses respectives dans la mémoire externe, puis, pour les besoins du traitement de données que le processeur applique, elles sont requises auprès du DMA en fonction de la localisation des pixels auxquelles elles sont respectivement associées, c'est-à-dire en général en fonction de coordonnées spatiales des différents pixels dans les images.

Pour certains traitements appliqués par le processeur, ce dernier peut requérir auprès du DMA la récupération dans la mémoire externe de données déterminées, sans pour autant connaître le format de stockage des données dans la mémoire externe. Ainsi, le processeur peut ne pas être en mesure d'indiquer au DMA la ou les adresses en mémoire correspondant aux données qu'il requiert.

Dans de telles conditions, le DMA a en charge de traduire une information reçue dans une requête de données depuis le dispositif de traitement en une adresse selon le format de stockage dans la mémoire externe. Pour effectuer une telle traduction et récupérer dans la mémoire externe les données requises, une règle de correspondance figée est généralement déterminée dans le DMA, de façon à faire correspondre l'information reçue dans la requête avec une adresse dans la mémoire externe.

Mais, une telle règle de correspondance figée est directement liée aux formats de stockage utilisés. Ainsi, il peut être complexe et lourd d'adapter un DMA à un autre format de stockage dans la mémoire externe.

La présente invention vise à pallier les inconvénients précités.

Un objectif de la présente invention est notamment d'augmenter la flexibilité d'un DMA, et de fournir un DMA qui est notamment en mesure de s'adapter de manière plus aisée à différents formats de stockage dans la mémoire externe.

Un premier aspect de la présente invention propose un procédé de gestion de données dans un système de traitement d'images comprenant :

- une mémoire stockant à des adresses de données respectives des données respectivement associées à des pixels des images, chaque adresse de données étant liée par une fonction bijective à des coordonnées respectives d'un pixel associé dans un référentiel ordonné d'image lié à une localisation des pixels dans l'image ;
- un dispositif de traitement comprenant un processeur adapté pour traiter les données respectivement associées aux pixels, un pixel à traiter par le dispositif de traitement étant pointé dans une image par un vecteur associé à partir d'un pixel de référence; et
- un dispositif d'interface adapté pour lire les données dans la mémoire et fournir les données lues au dispositif de traitement, ledit dispositif d'interface disposant de l'adresse des données associées à un pixel de référence.

Le procédé comprend les étapes suivantes exécutées au niveau du dispositif d'interface :

/a/ recevoir une requête de données indiquant un vecteur associé à un pixel à traiter ;

/b/ déterminer les coordonnées du pixel de référence en appliquant la fonction bijective à l'adresse des données associées au pixel de référence ;

/c/ obtenir les coordonnées du pixel à traiter à partir, d'une part, des coordonnées du pixel de référence déterminées à l'étape /b/, et d'autre part, du vecteur associé au pixel à traiter ;

/d/ déterminer l'adresse des données associées au pixel à traiter en appliquant la fonction inverse de la fonction bijective aux coordonnées du pixel à traiter obtenues à l'étape /c/ ; et

/e/ fournir au processeur les données lues dans la mémoire à l'adresse déterminée à l'étape /d/.

Le vecteur indiqué dans la requête reçue par le dispositif de traitement indique un déplacement depuis un pixel de référence vers le pixel à traiter dans l'image considérée. Par ailleurs, le dispositif d'interface dispose de l'adresse de données associées au pixel de référence. Il applique alors la fonction bijective à cette adresse dont il dispose pour obtenir les coordonnées du pixel de référence dans le référentiel ordonné d'image.

Ainsi, avantageusement, à ce stade le dispositif d'interface peut appliquer le déplacement correspondant au vecteur, indiqué dans la requête, au sein du référentiel ordonné d'image. Une telle opération est simple à mettre en oeuvre puisqu'elle est réalisée dans un référentiel qui est lié aux positions spatiales relatives des pixels dans l'image, référentiel dans lequel il est de ce fait aisé d'appliquer le vecteur indiqué dans la requête.

Le dispositif d'interface peut ainsi obtenir les coordonnées du pixel à traiter qu'il traduit en une adresse dans la mémoire grâce à l'application de la fonction inverse de la fonction bijective. Ensuite, il peut récupérer les données associées au pixel à traiter à cette adresse et fournir ces données au dispositif de traitement.

La fonction bijective permet au dispositif d'interface de traiter les informations reçues depuis le dispositif de traitement, dans le référentiel ordonné d'image.

L'utilisation d'une telle fonction offre une flexibilité importante pour récupérer de données en mémoire, notamment en cas de changement de format stockage. En effet, seules des modifications dans la fonction bijective permettent d'adapter le dispositif de traitement en cas de changement de format de stockage en mémoire.

La fonction bijective est définie, d'une part, en fonction du format de stockage dans la mémoire et, d'autre part, en fonction du référentiel ordonné d'image.

Dans un mode de réalisation de la présente invention, une image est divisée en une pluralité de macro blocs de pixels.

Les données, associées à des pixels d'un même macro bloc de pixels, sont arrangées, dans un macro bloc de données correspondant, selon un premier arrangement relatif aux positions respectives des pixels dans ledit macro bloc de pixels.

Les macro blocs de données sont arrangés en mémoire selon un second arrangement relatif aux positions respectives des macro blocs de pixels dans l'image.

Le référentiel ordonné d'image est défini à partir, d'une part, de coordonnées spatiales du pixel à traiter dans un référentiel spatial de l'image, et, d'autre part, du second arrangement.

Ainsi, avantageusement, le référentiel ordonné d'image reflète le second arrangement. Dans le cas où dans le format de stockage en mémoire, seul change le second arrangement, c'est-à-dire l'arrangement des macro blocs de données les uns par rapport aux autres, le référentiel ordonné d'image peut être aisément modifié de sorte à adapter de manière simple et efficace la fonction bijective au changement de format de stockage.

Dans un mode de réalisation de la présente invention, le second arrangement est tel que des colonnes de $2^N$ macro blocs de données sont stockées les unes à la suite des autres en parcourant successivement dans l'image les lignes de colonnes de $2^N$ macro blocs de pixels correspondant. Le référentiel ordonné d'image peut correspondre aux macro blocs de pixels d'une image arrangés sur la base du second arrangement, ce référentiel ordonné d'image comprenant alors 2N macro blocs de pixels arrangés selon un axe vertical.

Les coordonnées X' et Y' dans le référentiel ordonné d'image d'un pixel ayant des coordonnées spatiales X et Y dans l'image vérifient les équations suivantes :

$$X' = X + [Y/ P_{col\text{-}ref}] \times P_{ligne\text{-}image}$$

$$Y' = Y \bmod P_{col\text{-}ref}$$

où mod correspond à une opération modulo ;

$P_{col-ref}$ correspond au nombre de pixel par colonne dans le référentiel ordonné d'image, $P_{col-ref}$ étant égal à $2^N \times P_{col-MB}$ ;

$2^N$ correspond au nombre de macro blocs par colonne dans le référentiel ordonné d'image, N étant un nombre entier ;

$P_{col-MB}$ correspond au nombre de pixels par colonne dans un macro bloc ;

$P_{ligne-image}$ correspond au nombre de pixels par ligne dans une image ;

et

[a / b] correspond au quotient de la division de a par b.

Ainsi, dans le cas où les macro blocs de données sont arrangés en mémoire selon un ordre consistant à stocker des colonnes de $2^N$ macro blocs de l'image en parcourant successivement les lignes de colonnes de $2^N$ macro blocs, les coordonnées spatiales d'un pixel d'une image peuvent être aisément traduits en coordonnées dans le référentiel ordonné d'image.

Dans ce mode de réalisation de la présente invention, à l'étape /c/, les coordonnées X" et Y" du pixel à traiter vérifient les équations suivantes :

$$X'' = \{X' + X_v + ([Y_v/P_{col-ref}] + [(Y' + Y_v \bmod P_{col-ref})\bmod P_{col-ref} \} \times P_{ligne-image}$$

$$Y'' = (Y' + Y_v \bmod P_{col-ref})\bmod P_{col-ref}$$

où X' et Y' correspondent aux coordonnées du pixel de référence dans le référentiel ordonné d'image ;

$X_v$ et $Y_v$ sont les coordonnées du vecteur ;

$P_{col-ref}$ correspond au nombre de pixels par colonne dans le référentiel ordonné d'image, $P_{col-ref}$ étant égal à $2^N \times P_{col-MB}$ ;

$P_{col-mB}$ correspond au nombre de pixels par colonne dans un macro bloc ;

$2^N$ correspond au nombre de macro blocs par colonne dans le référentiel ordonné d'image, N étant un nombre entier ;

$P_{ligne-image}$ correspond au nombre de pixels par ligne dans l'image ;

l'opération mod correspond à une opération modulo ;

et

[a / b] correspond au quotient de la division de a par b.

Lorsqu'un pixel est associé à une adresse de données comprenant A bits, lorsqu'un macro bloc comprend $2^M$ pixels par ligne et par colonne, A et M étant des nombres entiers, alors la fonction bijective appliquée à l'adresse de données peut être telle que :

- elle fait correspondre les (A - 2xM) bits de poids fort d'adresse à des bits de poids fort des coordonnées, qui déterminent dans le référentiel ordonné d'image, le macro bloc de pixels auquel appartient le pixel associé, cette correspondance étant basée sur le second arrangement ; et
- elle fait correspondre les 2xM bits de poids faible de l'adresse à des bits de poids faible de coordonnées, qui déterminent dans le référentiel ordonné d'image, ledit pixel associé dans le macro bloc déterminé, cette correspondance étant basée sur le premier arrangement.

Le pixel de référence peut avantageusement correspondre au pixel précédemment traité par le dispositif de traitement.

Grâce à ces dispositions, un dispositif d'interface tel qu'un DMA est en mesure de s'adapter de manière aisé à des changements de formats de stockage en mémoire.

Un deuxième aspect de la présente invention propose un dispositif d'interface dans un système de traitement d'images comprenant en outre :

- une mémoire stockant à des adresses respectives des données respectivement associées à des pixels des images, chaque adresse de données étant liée par une fonction bijective à des coordonnées respectives d'un pixel associé dans un référentiel ordonné d'image lié à une localisation des pixels dans l'image ; et
- un dispositif de traitement comprenant un processeur adapté pour traiter les données respectivement associées aux pixels, un pixel à traiter par le dispositif de traitement étant pointé dans une image par un vecteur associé à partir d'un pixel de référence.

Le dispositif d'interface dispose d'une adresse des données associées à un pixel de référence, et comprend :

- une première unité d'interface adaptée pour, d'une part, recevoir une requête de données indiquant un vecteur associé à un pixel à traiter et, d'autre part, pour fournir les données requises au dispositif de traitement d'image ;
- une unité de détermination adaptée pour déterminer une adresse des données requises à partir d'une part du vecteur indiqué dans la requête et d'autre part de ladite adresse des données associées au pixel de référence, en réalisant les opérations suivantes sur la base de ladite fonction bijective :

   ■ transformer une adresse de données dans la mémoire en des coordonnées dans le référentiel ordonné d'image ;
   ■ ajouter à des coordonnées dans le référentiel ordonné d'image le vecteur associé au pixel à traiter; et
   ■ transformer des coordonnées d'un pixel dans le référentiel ordonné d'image en une adresse des données associées ;

   et
- une seconde unité d'interface adaptée pour récupérer, sur la base d'une adresse, des données correspondantes dans la mémoire.

Une image peut être divisée en une pluralité de macro blocs de pixels, les données associées à des pixels d'un même macro bloc de pixels, étant arrangées dans un macro bloc de données correspondant selon un premier arrangement relatif aux positions respectives des pixels dans le macro bloc de pixels ; et les macro blocs de données étant arrangés en mémoire selon un second arrangement relatif aux positions respectives des macro blocs de pixels dans l'image. L'unité de détermination peut déduire les coordonnées X' et Y' d'un pixel dans le référentiel ordonné d'image à partir, d'une part, de coordonnées spatiales X et Y dans l'image du pixel à traiter, et, d'autre part, du second arrangement relativement aux macro blocs de pixels de l'image.

Dans un mode de réalisation de la présente invention, l'unité de détermination gère l'application du second arrangement aux macro blocs de pixels, et obtient les coordonnées X' et Y' dans le référentiel ordonné d'image d'un pixel ayant des coordonnées spatiales X et Y dans l'image par les équations suivantes :

$$X' = X + [Y/ P_{col\text{-}ref}] \times P_{ligne\text{-}image}$$

$$Y' = Y \bmod P_{col\text{-}ref}$$

où mod correspond à une opération modulo ;
$P_{col\text{-}MB}$ correspond au nombre de pixels par colonne dans un macro bloc ;
$2^N$ correspond au nombre de macro blocs par colonne dans le référentiel ordonné d'image, où N est un nombre entier ;
$P_{col\text{-}ref}$ correspond au nombre de pixel par colonne dans le référentiel ordonné d'image, $P_{col\text{-}ref}$ étant égal à $2^N \times P_{col\text{-}MB}$;
$P_{ligne\text{-}image}$ correspond au nombre de pixels par ligne dans une image ;
et
[a / b] correspond au quotient de la division de a par b.

L'unité de détermination peut déterminer les coordonnées X" et Y" du pixel à traiter en réalisant l'opération consistant à ajouter aux coordonnées X' et Y' du pixel de référence dans le référentiel ordonné d'image le vecteur indiqué dans la requête, selon les équations suivantes :

$$X'' = \{X' + X_v + ([Y_v/P_{col\text{-}ref}] + [(Y' + Y_v \bmod P_{col\text{-}ref})\bmod P_{col\text{-}ref} ]\} \times P_{ligne\text{-}}$$

image

$$Y'' = (Y' + Y_v \bmod P_{col\text{-}ref})\bmod P_{col\text{-}ref}$$

où $X_v$ et $Y_v$ sont les coordonnées du vecteur ;
$P_{col\text{-}MB}$ correspond au nombre de pixels par colonne dans un macro bloc ;
$2^N$ correspond au nombre de macro blocs par colonne dans le référentiel ordonné d'image, N étant un nombre entier ;

$P_{col-ref}$ correspond au nombre de pixels par colonne dans le référentiel ordonné d'image, $P_{col-ref}$ étant égal à $2^N \times P_{col-MB}$ ;
$P_{ligne-image}$ correspond au nombre de pixels par ligne dans l'image ;
l'opération mod correspond à une opération modulo ;
et

[a / b] correspond au quotient de la division de a par b.

Un troisième aspect de la présente invention propose un système de traitement de données comprenant un dispositif de traitement selon le deuxième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre les principales étapes d'un procédé selon un mode de réalisation de la présente invention ;
- la figure 2 illustre un système de traitement d'images dans lequel peut être mis en oeuvre un mode de réalisation de la présente invention.;
- la figure 3 illustre un macro boc de pixels d'une image selon un mode de réalisation de la présente invention;
- la figure 4 illustre un premier arrangement selon un mode de réalisation de la présente invention, des données correspondant aux pixels illustrés en figure 3 dans un macro bloc de données stocké en mémoire ;
- la figure 5 illustre un second arrangement selon un mode de réalisation de la présente invention, des macro blocs de données en mémoire par rapport à la localisation des macro blocs de pixels dans l'image ;
- la figure 6 illustre un dispositif d'interface selon un mode de réalisation de la présente invention ;
- la figure 7 illustre un référentiel ordonné d'image selon un mode de réalisation de la présente invention ;
- la figure 8. illustre une fonction bijective selon un mode de réalisation de la présente invention.

On entend par les termes 'référentiel spatial de l'image', le référentiel défini pour une image par un axe des abscisses horizontal dans la direction de gauche à droite et un axe des ordonnées vertical dans la direction de haut en bas.

On entend par référentiel ordonné d'image, un référentiel lié à la localisation des pixels dans l'image, un ordre de parcours des pixels dans ce référentiel étant défini.

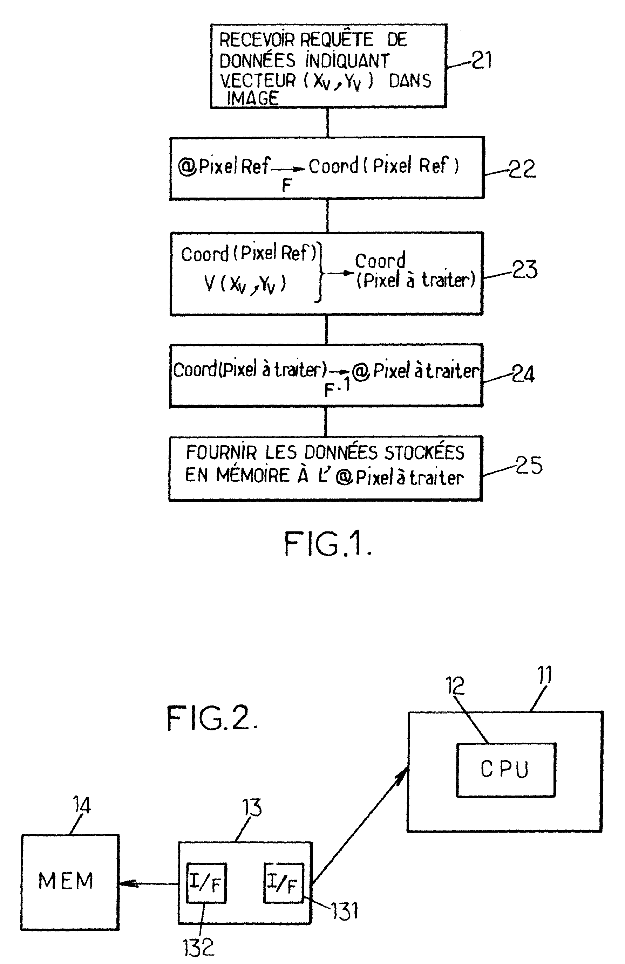

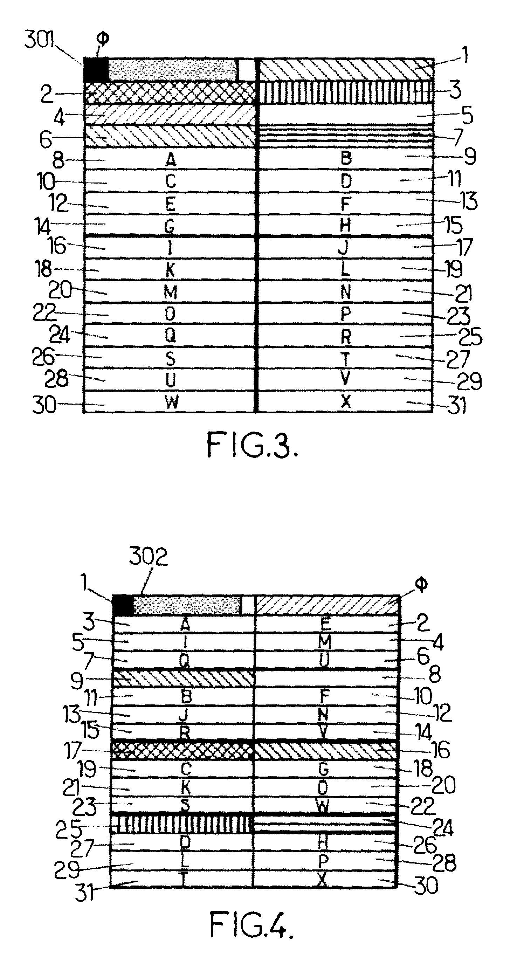

La figure 1 illustre les principales étapes d'un procédé selon un mode de réalisation de la présente invention.

Une fonction bijective F permet de transformer une adresse mémoire de données en des coordonnées d'un pixel associé à ces données dans un référentiel ordonné d'image, la fonction bijective inverse $F^{-1}$ réalisant l'opération inverse. Ces fonctions permettent ainsi de passer depuis un référentiel d'adresses dans la mémoire au référentiel ordonné d'image et vice-versa.

A une étape 21, un dispositif d'interface, adapté pour s'interfacer avec, d'une part, un dispositif de traitement de données et d'autre part une mémoire, reçoit une requête de données indiquant un vecteur de coordonnées spatiales X, Y dans un référentiel spatial défini par les lignes et les colonnes de pixels composant une image. Une telle requête peut être émise par le dispositif de traitement, le vecteur indiqué dans la requête pointant sur le pixel à traiter à partir d'un pixel de référence. Dans un mode de réalisation de la présente invention, le pixel de référence peut correspondre au pixel que le dispositif de traitement vient juste de traiter dans l'image en cours de traitement.

Le dispositif d'interface dispose de l'adresse dans la mémoire des données associées au pixel de référence. Ainsi, à une étape 22, grâce à la fonction bijective F, il est en mesure de déterminer les coordonnées du pixel de référence en appliquant ladite fonction bijective F à l'adresse dont il dispose. Il passe ainsi depuis un référentiel d'adresse mémoire au référentiel ordonné d'image, ce dernier étant issu du référentiel spatial dans lequel les coordonnées du vecteur sont indiquées.

Puis, à une étape 23, le dispositif d'interface obtient les coordonnées du pixel à traiter qui est le pixel pointé par le vecteur reçu dans la requête de données à partir du pixel de référence pour lequel il a préalablement déterminé les coordonnées dans le référentiel ordonné d'image et à partir du vecteur indiqué dans la requête.

A une étape 24, la fonction inverse est appliquée aux coordonnées du pixel à traiter. La fonction inverse $F^{-1}$ de la fonction bijective précédemment appliquée permet donc de déterminer l'adresse correspondant aux données relatives au pixel à traiter, c'est-à-dire l'adresse des données requises. Ici,

A une étape 25, les données qui sont stockées en mémoire à l'adresse déterminée à l'étape 24 sont récupérées et fournies au dispositif de traitement.

Dans les sections suivantes, la présente invention est décrite dans le cas où le pixel de référence considéré correspond au pixel qui a précédemment été traité, à titre d'exemple.

La figure 2 illustre un système de traitement d'images dans lequel peut être avantageusement mis en oeuvre un mode de réalisation de la présente invention.

Un tel système comprend un dispositif de traitement d'images 11 incluant un processeur 12. Ce dispositif de traitement d'images est adapté pour s'interfacer avec un dispositif d'interface 13, qui peut avantageusement être un dispositif de type DMA. Ce dispositif d'interface 13 comprend d'une part une première unité d'interface 131 adaptée pour communiquer avec le dispositif de traitement 11 et d'autre part une seconde unité d'interface 132 adaptée pour récupérer des données stockées dans la mémoire 14. Un tel dispositif de traitement applique en général un traitement successif sur différents pixels des images à traiter.

Ainsi, après avoir traité un pixel de cette image, il peut être conduit à requérir auprès du dispositif d'interface des données relatives au pixel prochain à traiter. Dans ce contexte, le prochain pixel peut avantageusement être défini par un vecteur qui pointe sur le prochain pixel à traiter depuis le pixel précédemment traité dans le référentiel spatial de l'image considérée.

Dans un mode de réalisation de la présente invention, le dispositif d'interface 13 reçoit une requête de données à récupérer dans la mémoire 14, cette requête indiquant un vecteur correspondant à un déplacement depuis un pixel vers un autre pixel dans l'image considéré.

A partir de ce déplacement, le dispositif d'interface 13 a en charge de déterminer l'adresse des données à récupérer pour traiter cette requête.

La présente invention est décrite dans les sections suivantes dans son application à une manipulation des données par macro blocs de 16 octets sur 16 octets. Toutefois, aucune limitation n'est attachée à une taille des blocs de données manipulées.

Dans un mode de réalisation de la présente invention, une image est divisée en une pluralité de macro blocs de pixels 301 qui se succèdent selon les axes verticaux et horizontaux de l'image, chaque macro blocs d'une image correspondant à 256 pixels.

Au sein d'un macro bloc, l'arrangement des données associées respectivement aux pixels de l'image dans la mémoire peut être différent de celui des pixels respectifs de l'image. En effet, l'arrangement des données en mémoire est fonction du format utilisé.

A titre illustratif et non limitatif, les sections suivantes décrivent un exemple de format de stockage des données associées aux pixels d'une image à traiter.

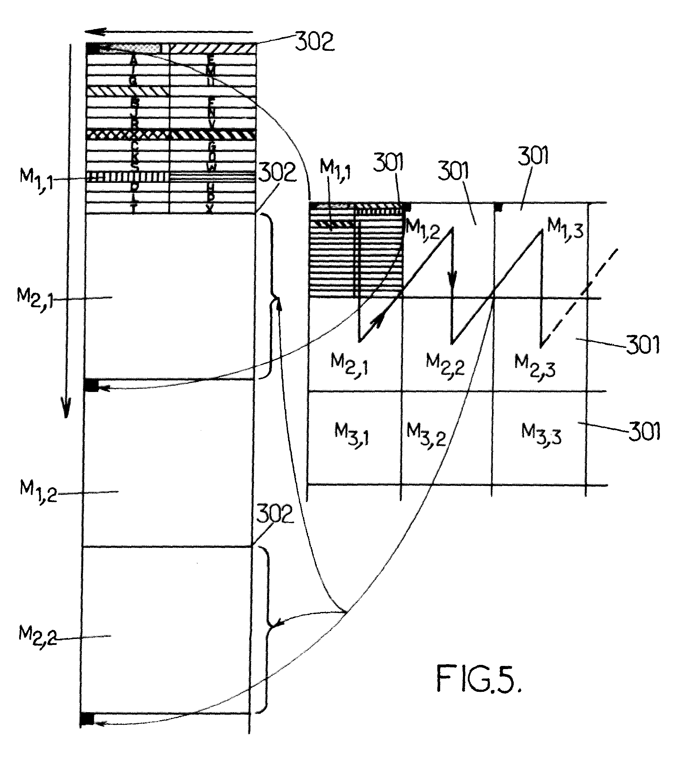

Ainsi, les figures 3 et 4 illustrent un exemple d'un premier arrangement des données en mémoire associées aux pixels d'un même macro bloc 301. Pour ce premier arrangement en mémoire, les pixels sont gérés par blocs de 8 pixels.

Plus précisément, la figure 3 illustre 32 blocs de 8 pixels d'un macro bloc de pixels d'une image, les données respectivement associées aux pixels de ce macro bloc étant illustrées en figure 4.

Ici, à un pixel de l'image correspond des données en mémoire de 8 bits. Aucune limitation n'est attachée à la taille des données associées à un pixel de l'image et stockées en mémoire.

Dans ces conditions, un macro bloc de 16x16 pixels est couvert par une matrice de données en mémoire de 16x16 octets. Dans cet exemple, les octets de données sont manipulés par groupe de 8.

Les 16x16 pixels de chaque macro bloc de l'image sont ordonnés de gauche à droite sur chacune des 16 lignes successives du macro bloc de pixels. Les pixels étant manipulés par bloc de 8 pixels, ils peuvent être indexés depuis l'index 0 à l'index 31 en parcourant successivement de haut en bas les lignes du macro bloc de gauche à droite.

La figure 4 illustre les données stockées en mémoire dans un macro bloc de données 302 correspondant au bloc de pixels 301 précédemment décrit. Ces données sont associées aux différents pixels du macro bloc illustré en figure 3. Dans cet exemple, les données associées aux pixels du macro bloc considéré sont ordonnées de droite à gauche sur chacune des 16 lignes du macro bloc en mémoire parcouru de haut en bas. Les 256 octets de données ont respectivement les adresses suivantes 0-255.

De la même manière que les pixels d'un macro bloc sont groupés par blocs de 8 pixels tel que précédemment défini, les données relatives aux 8 pixels d'un même bloc de pixels sont groupées dans un même bloc de 8 données respectives. Ainsi, les blocs de données peuvent être également indexés de 0-31 en parcourant de droite à gauche successivement les lignes du macro bloc en mémoire de haut en bas.

Dans cet exemple, les blocs de pixels 0-31 du macro bloc de pixels 301 de l'image sont associés respectivement aux blocs de données 1, 9, 17, 25, 0, 8, 16, 24, 3, 11, 19, 27, 2, 10, 18, 26, 5, 13, 21, 29, 4, *12, 20,* 28, 7, 15, 23, 31, 6, 14, 22, 30 du macro bloc de données 302.

Alors que les figures 3 et 4 illustrent, dans un mode de réalisation de la présente invention, au sein d'un macro bloc de données 302 un premier arrangement des données associées aux pixels successifs d'un macro bloc 301 d'une image, la figure 5, elle, illustre un second arrangement des macro blocs de données en mémoire relativement à la position respective des macro blocs de pixels dans l'image.

Dans cet exemple, l'image comprend une pluralité de macro blocs de pixels 302, $M_{i,j}$ pour i compris entre 1 et le nombre maximal $\mathbf{i_{max}}$ de macro blocs en ligne dans l'image considérée et j compris entre 1 et le nombre maximal $j_{max}$ de macro blocs en colonne dans l'image considérée.

En mémoire, ces macro blocs sont arrangés dans l'ordre défini de la façon suivante :

$$M_{1,1}; M_{2,1}; M_{1,2}; M_{2,2};...M_{2,jmax}; M_{3,1}; M_{4,1}; M_{3,2};...M_{4,jmax}...$$

Ainsi, au sein d'un macro bloc, les données sont arrangées en mémoire selon un premier arrangement et les macro blocs sont arrangés en mémoire selon un second arrangement.

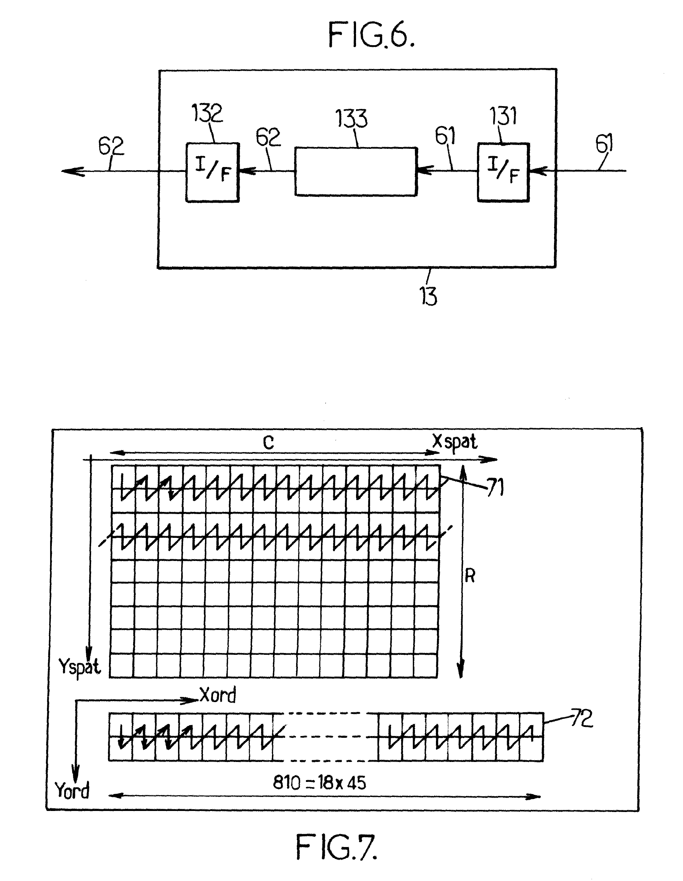

La figure 6 illustre plus particulièrement les différentes étapes mises en oeuvre au sein du dispositif d'interface 13 selon un mode de réalisation de la présente invention.

Via la première unité d'interface 131, un message de requête de données 61 est reçu, depuis le dispositif de traitement 11. Ce message de requête indique un vecteur de coordonnées $X_v$, $Y_v$, dans le référentiel spatial de l'image.

Ce vecteur pointe le pixel à traiter à partir d'un pixel de référence pour lequel le dispositif d'interface dispose de l'adresse des données qui lui sont associées.

Avantageusement, le dispositif d'interface 13 comprend une unité de détermination 133 adaptée pour déterminer une adresse des données requises par un message de requête 61 à partir, d'une part, du vecteur indiqué dans le message de requête et, d'autre part, d'une adresse des données associées au pixel de référence.

L'unité de détermination est adaptée pour réaliser les opérations suivantes sur la base d'une fonction bijective :

■ transformer une adresse de données dans la mémoire en des coordonnées dans le référentiel ordonné d'image ;
■ ajouter à des coordonnées dans le référentiel ordonné d'image le vecteur indiqué dans la requête ; et
■ transformer des coordonnées d'un pixel en une adresse des données associées ;

A cet effet, l'unité de transformation est adaptée pour gérer une fonction bijective F, et sa fonction inverse $F^{-1}$ qui permettent respectivement de traduire une adresse mémoire de données en des coordonnées du pixel associé à ces données dans le référentiel ordonné d'image et vice versa.

Aucune limitation n'est attachée à ce pixel de référence. Ce pixel de référence présente les caractéristiques suivantes :

- depuis ce dernier, le vecteur pointe le pixel à traiter ; et
- le dispositif d'interface dispose de l'adresse dans la mémoire des données qui lui sont associées.

Plus précisément, l'adresse des données associées au pixel de référence est transformée en des coordonnées du pixel de référence X' et Y' dans le référentiel ordonné d'image par application de la fonction bijective F.

Puis, l'unité de détermination obtient les coordonnées du pixel à traiter à partir de ces coordonnées X' et Y' ainsi que du vecteur indiqué dans le message de requête 61, qui a des coordonnées spatiales $X_v$ et $Y_v$ dans l'image considérée.

Les équations qui permettent d'obtenir les coordonnées du pixel à traiter à partir des coordonnées spatiales $X_v$ et $Y_v$ du vecteur dans l'image considérée et à partir des coordonnées du pixel de référence dans le référentiel ordonné d'image sont définies sur la base de l'ordre pris en considération pour concevoir le référentiel ordonné d'image. Ainsi, lorsque cet ordre est basé sur le second arrangement, les équations précitées sont écrites en fonction de ce second arrangement.

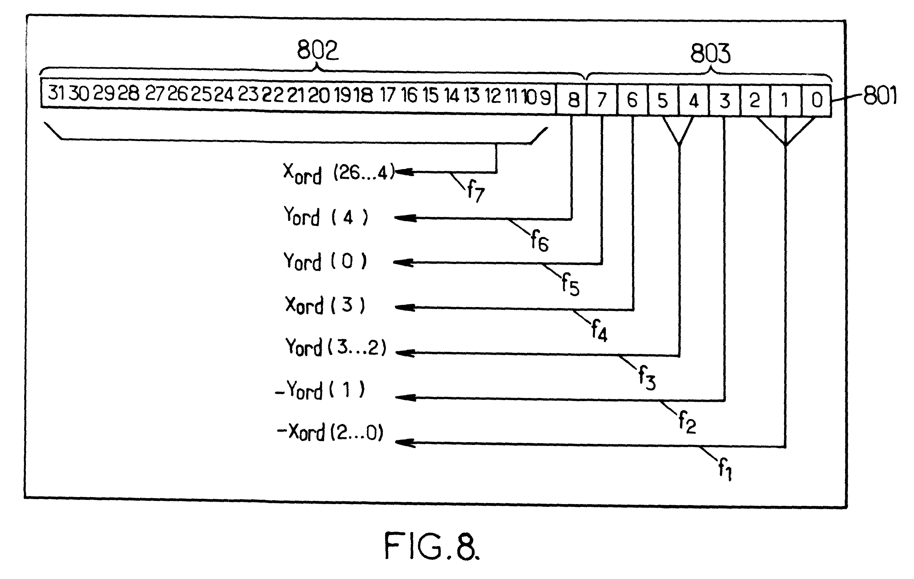

Des sections suivantes proposent de telles équations dans un exemple de référentiel ordonné d'image tel que celui illustré en figure 7.

Un tel référentiel ordonné d'image est fondé sur le second arrangement des macro blocs illustré en figure 5.

Une image 71 est divisée en un nombre CxL de macro blocs de pixels, C étant un nombre entier correspondant au nombre de macro blocs par ligne dans l'image et L correspondant au nombre de macro blocs par colonne dans l'image. Chaque macro bloc de cette image est identifié par ses coordonnées spatiales dans le référentiel spatial de l'image 71, l'axe des abscisses $X_{spat}$ étant orienté de gauche à droite et l'axe des ordonnées $Y_{spat}$ étant orienté de haut en bas.

Dans un mode de réalisation de la présente invention, les macro blocs sont ordonnés selon une matrice 72 ayant (LxC)/2 colonnes sur deux lignes. Les lignes de macro blocs de l'image sont donc successivement prises deux par deux, et accolées les unes aux autres. Ainsi, les derniers macro blocs des lignes k et k+1 sont respectivement accolés aux premiers macro blocs des lignes k+2 et k+3, k étant un nombre pair compris entre 0 et L.

On obtient donc la matrice 72, dans laquelle les macro blocs sont parcourus selon le sens des flèches illustrées en figure 7. Chaque macro bloc est défini par ses coordonnées dans un référentiel ordonné d'image selon un axe des abscisses $X_{ord}$ horizontal orienté de gauche à droite et un axe des ordonnées $Y_{ord}$ vertical orienté de haut en bas. Ainsi, les coordonnées spatiales d'un pixel $X_1$,$Y_1$ dans le référentiel spatial de l'image 71, sont transformées en coordonnées $X_2$, $Y_2$ dans le référentiel ordonné d'image illustré selon la matrice 72, selon les équations suivnates :

$$X_2 = X_1 + [Y_1/32]*P_{ligne-image}$$

$$Y_2 = Y_1 \bmod 32$$

où mod est l'opération modulo ;

où [a/b] est le quotient de la division de a par b ; et

où $P_{ligne\text{-}image}$ est le nombre de pixels sur une ligne de l'image, $P_{ligne\text{-}image}$ vérifiant donc ici l'équation suivante :

$$P_{ligne\text{-}image} = 16 \times C$$

Dans une telle représentation, un déplacement de deux macro blocs, c'est-à-dire dans l'exemple considéré, un déplacement de 32 pixels sur l'axe des ordonnées $Y_{ord}$ correspond en fait à un déplacement de 16 pixels sur l'axe des abscisses $X_{ord}$.

Les sections suivantes détaillent, dans un mode de réalisation de la présente invention, une fonction bijective appliquée aux adresses mémoire pour déterminer des coordonnées respectives dans le référentiel ordonné d'image et sa fonction inverse appliquée aux coordonnées du référentiel ordonné d'image pour déterminer des adresses mémoire respectives.

La figure 8 illustre une fonction bijective F dans un mode de réalisation de la présente invention. Dans cet exemple, le référentiel ordonné d'image correspond à celui illustré en figure 7, correspondant au second arrangement de macro blocs décrit en référence à la figure 5. Il présente donc la caractéristique de traduire un déplacement de deux macro blocs, ou encore de 32 pixels, selon l'axe des ordonnées $Y_{ord}$, en un déplacement selon l'axe des abscisses $X_{ord}$ d'un macro bloc, ou encore de 16 pixels.

En outre, dans cet exemple, au sein d'un macro bloc de données 302, les données sont arrangées selon le premier arrangement décrit en référence aux figures 3 et 4.

Une adresse 801 dans la mémoire est écrite sur 32 bits, des bits 0-31. La fonction bijective F permet avantageusement de transformer une adresse mémoire en des coordonnées du pixel auxquelles les données stockées à cette adresse sont associées dans le référentiel ordonné d'image.

Dans de telles conditions, c'est-à-dire lorsque l'arrangement de données au sein d'un macro bloc de données correspond au premier arrangement décrit et lorsque l'arrangement des macro blocs de données en mémoire correspond au second arrangement décrit et lorsque le référentiel réordonné d'image est fondé sur le second arrangement,, une première partie 802 des 32 bits de l'adresse mémoire 801, des bits de poids fort permet d'identifier un macro bloc dans le référentiel ordonné d'image et une seconde partie 803 des 32 bits de l'adresse 801, des bits de poids faible, permet d'identifier un pixel au sein du macro bloc identifié par la première partie des bits.

Dans cet exemple, un macro bloc de pixels comprend 256 pixels. Il en résulte que les bits 0-7 de l'adresse 801, c'est-à-dire la seconde partie 803, permettent d'identifier un pixel au sein d'un macro bloc.

Puis, les bits 8-31 appartiennent à la seconde partie de l'adresse 801, c'est-à-dire qu'ils permettent d'identifier un macro bloc dans le référentiel ordonné d'image.

Le passage de 0 à 1 de la valeur du bit 8 de l'adresse mémoire correspond à l'ajout de 256 à la valeur de l'adresse mémoire, c'est-à-dire un déplacement de 16 lignes dans la mémoire illustrée en figure 4, ou encore un déplacement d'un macro bloc de pixels dans le référentiel ordonné d'image, tel qu'illustré en figure 7. Ce déplacement correspond au passage à 1 de la valeur du bit 4 de la coordonnée selon l'axe $Y_{ord}$.

Le passage de 0 à 1 de la valeur du bit 9 de l'adresse mémoire correspond à l'ajout de 512 à la valeur de l'adresse mémoire, c'est-à-dire un déplacement de deux macro blocs. Un tel déplacement se traduit également dans le référentiel ordonné d'image par un déplacement de deux macro blocs, c'est-à-dire un déplacement d'une valeur de 16 pixels selon l'axe $X_{ord}$ tel qu'illustré en figure 7. Ce déplacement correspond donc au passage à 1 de la valeur du bit 4 de la coordonnée selon l'axe $X_{ord}$.

Le passage de 0 à 1 des valeurs des bits 10-31 dans le référentiel mémoire est traduit respectivement par des déplacements uniquement selon l'axe des abscisses $X_{ord}$ dans le référentiel ordonné d'image. Ces déplacements correspondent donc respectivement au passage à 1 des valeurs des bits 5-26 de la coordonnée $X_{réord}$.

La flèche $f_7$ illustre la correspondance des bits 9-31 de l'adresse avec les bits 4-26 de la coordonnée selon l'axe $X_{ord}$.

La flèche $f_6$ illustre la correspondance du bit 8 de l'adresse avec le bit 4 de la coordonnée selon l'axe $Y_{ord}$.

Puis, les bits 0-7 de l'adresse mémoire 801 permettent d'identifier un pixel dans le macro bloc identifié par les bits 8-31.

Les bits 0-2 de l'adresse mémoire couvrent les adresses 0 à 15 d'un macro blocs de données dans la mémoire. A ces adresses sont stockées les données correspondant aux 16 pixels de la première ligne du macro bloc de pixels illustré en figure 3, mais dans un ordre inverse. Ainsi par exemple, les données correspondant au pixel de coordonnées (0,0) dans le macro bloc de l'image sont stockées à l'adresse 15 dans la mémoire. Par conséquent, les valeurs des bits 0-2 de l'adresse mémoire correspondent aux valeurs inverses des coordonnées sur l'axe des abscisses $X_{ord}$, tel que cela est illustré par la flèche $f_1$ en figure 8.

Le passage de 0 à 1 de la valeur du bit 3 de l'adresse mémoire 801 correspond à l'ajout de 8 à la valeur de l'adresse mémoire. Un tel déplacement en mémoire se traduit dans le référentiel ordonné d'image par un déplacement sur l'axe des ordonnées $Y_{ord}$ d'une valeur de -2 pixels. Ainsi, la valeur du bit 3 de la mémoire est traduite en la valeur inverse du bit 1 de la coordonnée $Y_{ord}$, tel qu'illustré par la flèche $f_2$.

Le passage de 0 à 1 de la valeur du bit 4 de l'adresse mémoire 801 correspond à l'ajout de 16 à la valeur de l'adresse mémoire. Un tel déplacement se traduit dans le référentiel ordonné d'image par un déplacement sur l'axe des ordonnées $Y_{ord}$ d'une valeur de 4 pixels. Ainsi, la valeur du bit 4 de la mémoire est traduite en la valeur du bit 2 de la coordonnée $Y_{ord}$, tel qu'illustré par la flèche $f_3$.

Le passage de 0 à 1 de la valeur du bit 5 de l'adresse mémoire correspond à l'ajout de 32 à la valeur de l'adresse mémoire. Un tel déplacement dans la mémoire 801 se traduit dans le référentiel ordonné d'image par un déplacement sur l'axe des ordonnées $Y_{ord}$ d'une valeur de 8 pixels. Ainsi, la valeur du bit 5 de la mémoire est traduite en la valeur du bit 3 de la coordonnée $Y_{ord}$.

Le passage de 0 à 1 de la valeur du bit 6 de l'adresse mémoire correspond à l'ajout de 64 à la valeur de l'adresse mémoire. Un tel déplacement dans la mémoire 801 se traduit dans le référentiel ordonné d'image par un déplacement sur l'axe des abscisses $X_{réord}$ d'une valeur de 8 pixels. Ainsi, la valeur du bit 6 de la mémoire est traduite en la valeur du bit 3 de la coordonnée $X_{ord}$ (flèche $f_4$).

Le passage de 0 à 1 la valeur du bit 7 de l'adresse mémoire correspond à l'ajout de 128 à la valeur de l'adresse mémoire, c'est-à-dire un déplacement de 8 lignes dans la mémoire illustrée en figure 4. Un tel déplacement se traduit dans le référentiel ordonné d'image par un déplacement d'un pixel selon l'axe $Y_{ord}$. Ainsi, la valeur du bit 7 de la mémoire est traduite en la valeur du bit 0 de la coordonnée $Y_{ord}$ (flèche $f_5$).

Ainsi, par cette transformation des valeurs des bits de l'adresse mémoire en valeurs respectives des bits des coordonnées $X_{ord}$ et $Y_{ord}$, on obtient une fonction bijective F qui permet de transformer une adresse mémoire en des coordonnées dans le référentiel ordonné d'image.

On déduit aisément une fonction inverse $F^{-1}$ de cette fonction F qui permet de transformer des coordonnées dans le référentiel ordonné d'image en une adresse mémoire.

Le référentiel ordonné d'image pourrait être choisi différent de celui qui est illustré en figure 7, et qui est considéré dans l'exemple. En effet, on peut considérer un référentiel ordonné d'image qui ne présente qu'une ligne, ou encore 4, 8, ou 16 lignes.

Dans le cas où, par exemple, le référentiel ordonné d'image ne contient qu'une ligne, l'abscisse $Y_{réord}$ s'écrit sur 4 bits. Dans ce cas, la description des sections ci-avant concernant les bits 0-7 reste identique puisqu'elle concerne un déplacement au sein d'un macro bloc.

En revanche, dans le référentiel ordonné d'image comprenant un seule ligne, le passage à 1 de la valeur du bit 8 de l'adresse mémoire correspondant à un déplacement d'un macro bloc, se traduit ici en un déplacement de 16 pixels sur l'axe des abscisses $X_{ord}$, donc au passage à 1 de la valeur du bit 4 de la coordonnée selon l'axe $X_{ord}$.

De manière plus générale, le référentiel ordonné d'image présente la caractéristique de traduire un déplacement de $2^N$ macro blocs selon l'axe des ordonnées $Y_{ord}$ en un déplacement selon l'axe des abscisses $X_{ord}$, N étant un entier.

Un tel référentiel ordonné d'image peut donc avoir un nombre de macro blocs par colonne égal à $2^N$.

Dans ce cas là, le passage d'un macro bloc à un autre macro bloc dans le référentiel mémoire, c'est-à-dire le passage à 1 de la valeur du bit 9 de l'adresse mémoire, se traduit par :

- un déplacement de 16 pixels selon l'axe $X_{ord}$ si N est égal à 0 ; ou
- un déplacement de 16 pixels selon l'axe $Y_{ord}$ dans tous les autres cas.

Puis, un déplacement de deux macro-blocs dans le référentiel mémoire, c'est-à-dire le passage à 1 de la valeur du bit 10 de l'adresse mémoire, se traduit par :

- un déplacement de 32 pixels selon l'axe $X_{ord}$ si N est égal à 0 ; ou
- un déplacement de 16 pixels selon $X_{ord}$ si N est égal à 1 ; ou
- un déplacement selon 32 pixels selon $Y_{ord}$ dans tous les autres cas.

Puis, un déplacement de quatre macro-blocs dans le référentiel mémoire, c'est-à-dire le passage à 1 de la valeur du bit 11 de l'adresse mémoire, se traduit par :

- un déplacement de 64 pixels selon $X_{ord}$ si N est égal à 0 ; ou

- un déplacement de 32 pixels selon $X_{ord}$ si N est égal à 1 ; ou
- un déplacement selon 64 pixels selon $Y_{ord}$ dans tous les autres cas.

Puis, un déplacement de huit macro-blocs dans le référentiel mémoire, c'est-à-dire le passage à 1 de la valeur du bit 12 de l'adresse mémoire, se traduit par :

- un déplacement de 128 pixels selon $X_{ord}$ si N est égal à 0 ; ou
- un déplacement de 64 pixels selon $X_{ord}$ si N est égal à 1; ou
- un déplacement de 32 pixels selon $X_{ord}$ si N est égal à 2; ou
- un déplacement selon 128 pixels selon $Y_{ord}$ dans tous les autres cas.

On peut appliquer le principe ci-dessus énoncé à une quelconque valeur du nombre entier N.

Ainsi, une fonction bijective F et sa fonction inverse $F^{-1}$ peuvent être définies aisément quelque soit la valeur de N utilisée pour déterminer le référentiel ordonné d'image.

Dans le référentiel ordonné d'image ainsi déterminé, les coordonnées d'un pixel $(X'',Y'')$ pointé par un vecteur de coordonnées $(X_v,Y_v)$ dans le référentiel spatial de l'image, à partir d'un pixel de référence de coordonnées $(X',Y')$ dans le référentiel ordonné d'image vérifient les équations suivantes :

$$X'' = \{X' + X_v + ([Y_v/P_{col\text{-}ref}] + [(Y' + Y_v \bmod P_{col\text{-}ref})\bmod P_{col\text{-}ref} ]\} \times P_{ligne\text{-}image}$$

$$Y'' = (Y' + Y_v \bmod P_{col\text{-}ref})\bmod P_{col\text{-}ref}$$

où $X_v$ et $Y_v$ sont les coordonnées du vecteur ;

$P_{col\text{-}MB}$ correspond au nombre de pixels par colonne dans un macro bloc ;

$2^N$ correspond au nombre de macro blocs par colonne dans le référentiel ordonné d'image, N étant un nombre entier ;

$P_{col\text{-}ref}$ correspond au nombre de pixels par colonne dans le référentiel ordonné d'image, $P_{col\text{-}ref}$ étant égal à $2^N \times P_{col\text{-}MB}$ ;

$P_{ligne\text{-}image}$ correspond au nombre de pixels par ligne dans l'image ;

l'opération mod correspond à une opération modulo ;

et

$[a / b]$ correspond au quotient de la division de a par b.

Ainsi, un mode de réalisation de la présente invention peut aisément être appliqué à un macro bloc d'une taille quelconque comprenant un nombre quelconque de pixels par ligne $P_{lignes\text{-}MB}$ et un nombre quelconque de pixels par colonne $P_{col\text{-}MB}$.

Les deux équations ci-dessus permettent notamment de déterminer les coordonnées d'un pixel dans un référentiel ordonné d'image comprenant un nombre $2^N$ de macro blocs par colonne, à partir d'un vecteur $(X_v, Y_v)$ et d'un pixel de référence $(X',Y')$ dans le référentiel ordonné d'image.

En outre, il est aisé de déterminer une fonction bijective F et sa fonction inverse $F^{-1}$ telles que celles définies en référence à la figure 8 dans les sections précédentes. Ces fonctions bijectives permettent de passer d'une adresse mémoire à des coordonnées d'un pixel associé à cette adresse dans le référentiel réordonné considéré.

On peut donc mettre en oeuvre une gestion des données à récupérer dans la mémoire qui reste adaptable aisément à un quelconque premier et second arrangement, c'est-à-dire à l'arrangement des données en mémoire au sein d'un macro bloc de données en relation avec la position respective des pixels dans le macro bloc de pixels correspondant et à l'arrangement des macro blocs de données en mémoire en relation avec la position respective des macro blocs de pixels dans l'image.

**Revendications**

1. Procédé de gestion de données dans un système de traitement d'images comprenant :

    - une mémoire (14) stockant à des adresses de données respectives des données respectivement associées à des pixels des images, chaque adresse de données étant liée par une fonction bijective à des coordonnées respectives $(X', Y')$ d'un pixel associé dans un référentiel ordonné d'image lié à une localisation des pixels dans l'image;

- un dispositif de traitement (11) comprenant un processeur adapté pour traiter les données respectivement associées aux pixels, un pixel à traiter par le dispositif de traitement étant pointé dans une image par un vecteur associé à partir d'un pixel de référence; et

- un dispositif d'interface (13) adapté pour lire les données dans la mémoire et fournir les données lues au dispositif de traitement, ledit dispositif d'interface disposant de l'adresse des données associées à un pixel de référence ;

ledit procédé comprenant les étapes suivantes exécutées au niveau du dispositif d'interface :

/a/ recevoir une requête de données (21) indiquant un vecteur associé à un pixel à traiter ;
/b/ déterminer (22) les coordonnées du pixel de référence en appliquant la fonction bijective (F) à l'adresse des données associées au pixel de référence ;
/c/ obtenir (23) les coordonnées du pixel à traiter à partir, d'une part, des coordonnées du pixel de référence déterminées à l'étape /b/, et d'autre part, du vecteur associé au pixel à traiter ;
/d/ déterminer (24) l'adresse des données associées au pixel à traiter en appliquant la fonction inverse de la fonction bijective ($F^{-1}$) aux coordonnées du pixel à traiter obtenues à l'étape /c/ ; et
/e/ fournir (25) au processeur les données lues dans la mémoire à l'adresse déterminée à l'étape /d/ ; dans lequel, une image (72) étant divisée en une pluralité de macro blocs de pixels (301) ;

les données, associées à des pixels d'un même macro bloc de pixels étant arrangées dans un macro bloc de données correspondant (302) selon un premier arrangement relatif aux positions respectives des pixels dans ledit macro bloc de pixels ; et
les macro blocs de données étant arrangés en mémoire selon un second arrangement relatif aux positions respectives des macro blocs de pixels dans l'image ;
le référentiel ordonné d'image est défini à partir, d'une part, de coordonnées spatiales (X,Y) du pixel à traiter dans un référentiel spatial de l'image, et, d'autre part, du second arrangement.

2. Procédé de gestion de données selon la revendication 1, dans lequel, le second arrangement est tel que des colonnes de $2^N$ macro blocs de données sont stockées les unes à la suite des autres en parcourant successivement dans l'image les lignes de colonnes de $2^N$ macro blocs de pixels correspondant, N étant un nombre entier ; et
dans lequel le référentiel ordonné d'image correspond aux macro blocs de pixels d'une image arrangés sur la base du second arrangement, et comprend 2N macro blocs de pixels arrangés selon un axe vertical ; et
dans lequel les coordonnées X' et Y' dans le référentiel ordonné d'image d'un pixel ayant des coordonnées spatiales X et Y dans l'image vérifient les équations suivantes :

$$X' = X + [Y/ P_{\text{col-ref}}] \times P_{\text{ligne-image}}$$

$$Y' = Y \bmod P_{\text{col-ref}}$$

où mod correspond à une opération modulo ;
$P_{\text{col-ref}}$ correspond au nombre de pixel par colonne dans le référentiel ordonné d'image, $P_{\text{col-ref}}$ étant égal à $2^N \times P_{\text{col-MB}}$;
$2^N$ correspond au nombre de macro blocs par colonne dans le référentiel ordonné d'image, N étant un nombre entier ;
$P_{\text{col-MB}}$ correspond au nombre de pixels par colonne dans un macro bloc ;
$P_{\text{ligne-image}}$ correspond au nombre de pixels par ligne dans une image ;
et
[a / b] correspond au quotient de la division de a par b.

3. Procédé de gestion de données selon la revendication 1 ou 2, dans lequel, à l'étape /c/, les coordonnées X" et Y" du pixel à traiter vérifient les équations suivantes :

$$X'' = \{X' + X_v + ([Y_v/P_{col\text{-}ref}] + [(Y' + Y_v \bmod P_{col\text{-}ref}) \bmod P_{col\text{-}ref}]\} \times P_{ligne\text{-}image}$$

$$Y'' = (Y' + Y_v \bmod P_{col\text{-}ref}) \bmod P_{col\text{-}ref}$$

où X' et Y' correspondent aux coordonnées du pixel de référence dans le référentiel ordonné d'image ;

$X_v$ et $Y_v$ sont les coordonnées du vecteur ;

$P_{col\text{-}ref}$ correspond au nombre de pixels par colonne dans le référentiel ordonné d'image, $P_{col\text{-}ref}$ étant égal à $2^N \times P_{col\text{-}MB}$ ;

$P_{col\text{-}MB}$ correspond au nombre de pixels par colonne dans un macro bloc ;

$2^N$ correspond au nombre de macro blocs par colonne dans le référentiel ordonné d'image, N étant un nombre entier ;

$P_{ligne\text{-}image}$ correspond au nombre de pixels par ligne dans l'image ;

l'opération mod correspond à une opération modulo ;

et

[a / b] correspond au quotient de la division de a par b.

4. Procédé de gestion de données selon l'une des revendications 1 à 3, dans lequel,
   un pixel étant associé à une adresse (801) de données comprenant A bits, et un macro bloc comprenant $2^M$ pixels par ligne et par colonne, A et M étant des nombres entiers,
   la fonction bijective appliquée à ladite adresse de données est telle que :

   - elle fait correspondre les (A - 2xM) bits de poids fort de l'adresse à des bits de poids fort des coordonnées qui déterminent, dans le référentiel ordonné d'image, le macro bloc de pixels auquel appartient le pixel associé, cette correspondance étant basée sur le second arrangement ; et
   - elle fait correspondre les 2xM bits de poids faible de l'adresse à des bits de poids faible des coordonnées qui déterminent, dans le référentiel ordonné d'image, le pixel associé dans le macro bloc déterminé, cette correspondance étant basée sur le premier arrangement.

5. Dispositif d'interface dans un système de traitement d'images comprenant en outre :

   - une mémoire (14) stockant à des adresses respectives des données respectivement associées à des pixels des images, chaque adresse de données étant liée par une fonction bijective à des coordonnées respectives (X', Y') d'un pixel associé dans un référentiel ordonné d'image lié à une localisation des pixels dans l'image ; et
   - un dispositif de traitement (11) comprenant un processeur adapté pour traiter les données respectivement associées aux pixels, un pixel à traiter par le dispositif de traitement étant pointé dans une image par un vecteur associé à partir d'un pixel de référence ;

   le dispositif d'interface disposant d'une adresse des données associées à un pixel de référence, et comprenant :

   - une première unité d'interface (131) adaptée pour, d'une part, recevoir une requête de données (21) indiquant un vecteur associé à un pixel à traiter et, d'autre part, pour fournir les données requises au dispositif de traitement d'image ;
   - une unité de détermination (133) adaptée pour déterminer (22) une adresse des données requises à partir d'une part du vecteur indiqué dans ladite requête et d'autre part de ladite adresse des données associées au pixel de référence, en réalisant les opérations suivantes sur la base de ladite fonction bijective :

      ■ transformer une adresse de données dans la mémoire en des coordonnées dans le référentiel ordonné d'image ;
      ■ ajouter à des coordonnées dans le référentiel ordonné d'image le vecteur associé au pixel à traiter; et
      ■ transformer des coordonnées d'un pixel dans le référentiel ordonné d'image en une adresse des données associées;

   et
   - une seconde unité d'interface (132) adaptée pour récupérer, sur la base d'une adresse, des données correspondantes dans la mémoire.

dans lequel, une image (72) étant divisée en une pluralité de macro blocs de pixels (301) ;

les données associées à des pixels d'un même macro bloc de pixels, étant arrangées dans un macro bloc de données correspondant (302) selon un premier arrangement relatif aux positions respectives des pixels dans ledit macro bloc de pixels ; et

les macro blocs de données étant arrangés en mémoire selon un second arrangement relatif aux positions respectives des macro blocs de pixels dans l'image ;

l'unité de détermination (133) déduisant les coordonnées X' et Y' d'un pixel dans le référentiel ordonné d'image à partir, d'une part, de coordonnées spatiales X et Y dans l'image du pixel à traiter, et, d'autre part, du second arrangement relativement aux macro blocs de pixels de l'image.

6. Dispositif d'interface selon la revendication 5, dans lequel, l'unité de détermination gère l'application du second arrangement aux macro blocs de pixels, et obtient les coordonnées X' et Y' dans le référentiel ordonné d'image d'un pixel ayant des coordonnées spatiales X et Y dans l'image par les équations suivantes :

$$X' = X + [Y/ P_{col\text{-}ref}] \times P_{ligne\text{-}image}$$

$$Y' = Y \bmod P_{col\text{-}ref}$$

où mod correspond à une opération modulo ;

$P_{col\text{-}MB}$ correspond au nombre de pixels par colonne dans un macro bloc ;

$2^N$ correspond au nombre de macro blocs par colonne dans le référentiel ordonné d'image, où N est un nombre entier ;

$P_{col\text{-}ref}$ correspond au nombre de pixel par colonne dans le référentiel ordonné d'image, $P_{col\text{-}ref}$ étant égal à $2^N \times P_{col\text{-}MB}$ ;

$P_{ligne\text{-}image}$ correspond au nombre de pixels par ligne dans une image ;

et

[a / b] correspond au quotient de la division de a par b.

7. Dispositif d'interface selon la revendication 5 ou 6, dans lequel, l'unité de détermination détermine les coordonnées X" et Y" du pixel à traiter en réalisant l'opération consistant à ajouter aux coordonnées X' et Y' du pixel de référence dans le référentiel ordonné d'image le vecteur indiqué dans la requête, selon les équations suivantes :

$$X'' = \{X' + X_v + ([Y_v/P_{col\text{-}ref}] + [(Y' + Y_v \bmod P_{col\text{-}ref})\bmod P_{col\text{-}ref} ]\} \times P_{ligne\text{-}image}$$

$$Y'' = (Y' + Y_v \bmod P_{col\text{-}ref})\bmod P_{col\text{-}ref}$$

où $X_v$ et $Y_v$ sont les coordonnées du vecteur ;

$P_{col\text{-}MB}$ correspond au nombre de pixels par colonne dans un macro bloc ;

$2^N$ correspond au nombre de macro blocs par colonne dans le référentiel ordonné d'image, N étant un nombre entier ;

$P_{col\text{-}ref}$ correspond au nombre de pixels par colonne dans le référentiel ordonné d'image, $P_{col\text{-}ref}$ étant égal à $2^N \times P_{col\text{-}MB}$ ;

$P_{ligne\text{-}image}$ correspond au nombre de pixels par ligne dans l'image ;

l'opération mod correspond à une opération modulo ;

et

[a / b] correspond au quotient de la division de a par b.

8. Dispositif d'interface selon la revendication 6 ou 7, dans lequel, un pixel étant associé à une adresse (801) de données comprenant A bits, un macro bloc comprenant $2^M$ pixels par ligne et par colonne, A et M étant des nombres entiers,
la fonction bijective appliquée à ladite adresse de données est telle que :

- elle fait correspondre les (A - 2xM) bits de poids fort d'adresse à des bits de poids fort des coordonnées, qui déterminent dans le référentiel ordonné d'image, le macro bloc de pixels auquel appartient le pixel associé, cette correspondance étant basée sur le second arrangement ; et
- elle fait correspondre les 2xM bits de poids faible de l'adresse à des bits de poids faible de coordonnées, qui déterminent dans le référentiel ordonné d'image, le pixel associé dans le macro bloc déterminé, cette correspondance étant basée sur le premier arrangement.

9. Système de traitement d'images comprenant un dispositif d'interface selon l'une quelconque des revendications 5 à 8.

RECEVOIR REQUÊTE DE
DONNÉES INDIQUANT
VECTEUR ($X_V$, $Y_V$) DANS
IMAGE — 21

@Pixel Ref $\xrightarrow{F}$ Coord (Pixel Ref) — 22

$\left.\begin{array}{l} \text{Coord (Pixel Ref)} \\ V(X_V, Y_V) \end{array}\right\} \rightarrow$ Coord (Pixel à traiter) — 23

Coord(Pixel à traiter) $\xrightarrow{F^{-1}}$ @Pixel à traiter — 24

FOURNIR LES DONNÉES STOCKÉES
EN MÉMOIRE À L'@Pixel à traiter — 25

## FIG.1.

## FIG.2.

MEM — 14

13

I/F — 132    I/F — 131

CPU

12    11

FIG.3.

FIG.4.

FIG.5.

# FIG.6.

# FIG.7.

FIG.8.

**Office européen des brevets**

**RAPPORT DE RECHERCHE EUROPEENNE**

Numéro de la demande

EP 07 11 0701

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ERAN BRIMAN: "Portable Multimedia: Powerful, Flexible Solutions Powered by CEVA's Mobile-Media" CEVA WHITE PAPER, [Online] 2005, XP002429838 Extrait de l'Internet: URL:http://www.ceva-dsp.com/products/platforms/pdf/ceva_portable_multimedia_whitepaper.pdf> [extrait le 2007-04-16] * page 7, colonne de droite, ligne 21 - page 9, colonne de gauche, ligne 1 * ----- | 1-9 | INV. G06T1/60 |
| A | US 6 310 918 B1 (SAHA ANGSHUMAN [US] ET AL) 30 octobre 2001 (2001-10-30) * colonne 20, ligne 7-19 * * colonne 22, ligne 55 - colonne 23, ligne 6 * * figure 14 * ----- | 1-9 | |
| A | RAMADURAI V ET AL: "Implementation of H. 264 Decoder on Sandblaster DSP" MULTIMEDIA AND EXPO, 2005. ICME 2005. IEEE INTERNATIONAL CONFERENCE ON AMSTERDAM, THE NETHERLANDS 06-06 JULY 2005, PISCATAWAY, NJ, USA,IEEE, 6 juillet 2005 (2005-07-06), pages 694-698, XP010844251 ISBN: 0-7803-9331-7 Section 3 et 3.3 en particulier ----- | 1-9 | **DOMAINES TECHNIQUES RECHERCHES (IPC)** G06T H04N G06F |
| A | SUN H ET AL: "A NEW APPROACH FOR MEMORY EFFICIENT ATV DECODING" IEEE TRANSACTIONS ON CONSUMER ELECTRONICS, IEEE SERVICE CENTER, NEW YORK, NY, US, vol. 43, no. 3, 1 août 1997 (1997-08-01), pages 517-525, XP000742526 ISSN: 0098-3063 Section III. B - "Motion Vector Address Generator" ----- -/-- | 1 | |

Le présent rapport a été établi pour toutes les revendications

| Lieu de la recherche | Date d'achèvement de la recherche | Examinateur |
|---|---|---|
| La Haye | 30 juillet 2007 | ALMEIDA GARCIA, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 07 11 0701

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 963 222 A (CHENEY DENNIS P [US] ET AL) 5 octobre 1999 (1999-10-05) * le document en entier * ----- | 1 | |
| A | US 5 900 865 A (HOWE BRADLEY [US]) 4 mai 1999 (1999-05-04) * le document en entier * ----- | | |
| A | US 5 675 387 A (HOOGENBOOM CHRIS [US] ET AL) 7 octobre 1997 (1997-10-07) * le document en entier * ----- | | |
| A | US 2004/057522 A1 (WU QIONG [US] ET AL) 25 mars 2004 (2004-03-25) * le document en entier * ----- | | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 30 juillet 2007 | ALMEIDA GARCIA, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 07 11 0701

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-07-2007

| Document brevet cité au rapport de recherche | | Date de publication | Membre(s) de la famille de brevet(s) | | Date de publication |
|---|---|---|---|---|---|
| US 6310918 | B1 | 30-10-2001 | US<br>US | 6289053 B1<br>6266091 B1 | 11-09-2001<br>24-07-2001 |
| US 5963222 | A | 05-10-1999 | US<br>US | 5973740 A<br>5929911 A | 26-10-1999<br>27-07-1999 |
| US 5900865 | A | 04-05-1999 | US<br>US | 5596376 A<br>5604540 A | 21-01-1997<br>18-02-1997 |
| US 5675387 | A | 07-10-1997 | AU<br>AU<br>BR<br>CA<br>CN<br>DE<br>DE<br>EP<br>HK<br>JP<br>NO | 688521 B2<br>2729195 A<br>9503640 A<br>2155260 A1<br>1121673 A<br>69526470 D1<br>69526470 T2<br>0697794 A2<br>1012140 A1<br>8195960 A<br>953193 A | 12-03-1998<br>29-02-1996<br>28-05-1996<br>16-02-1996<br>01-05-1996<br>29-05-2002<br>19-12-2002<br>21-02-1996<br>27-09-2002<br>30-07-1996<br>16-02-1996 |
| US 2004057522 | A1 | 25-03-2004 | AU<br>JP<br>WO<br>US | 2003270387 A1<br>2005538648 T<br>2004025944 A2<br>2006280245 A1 | 30-04-2004<br>15-12-2005<br>25-03-2004<br>14-12-2006 |

EPO FORM P0460

Pour tout renseignement concernant cette annexe : voir Journal Officiel de l'Office européen des brevets, No.12/82